# EUROPEAN PATENT SPECIFICATION

(11) **EP 1 609 043 B1**
(45) Date of publication and mention of the grant of the patent: **04.08.2010**
(21) Application number: 04724732.5
(22) Date of filing: 31.03.2004
(51) Int. Cl.: G06F 1/00, H04M 1/725

(54) **APPARATUS FOR AUTHORISING ACCESS TO AN ELECTRONIC DEVICE**
APPARAT ZUR ZUGRIFFSAUTORISIERUNG AUF EIN ELEKTRONISCHES GERÄT
APPAREIL AUTORISANT L'ACCES A UN DISPOSITIF ELECTRONIQUE

(30) Priority: 02.04.2003 GB 0307628
(43) Date of publication of application: 28.12.2005
(73) Proprietor: NEC CORPORATION, Minato-ku, Tokyo 108-8001 (JP)
(72) Inventor: PARKER, John, c/o NEC Corporation, Tokyo (JP)
(74) Representative: Vossius & Partner
(86) International application number: PCT/JP2004/004582
(87) International publication number: WO 2004/090781

(56) References cited:
- EP-A- 1 089 157
- EP-A- 1 291 748
- US-A- 6 070 240
- US-B1- 6 515 575

## Description

### Technical Field:

The present invention relates to an apparatus for authorising access to an electronic device.

### Background Art:

Third generation mobile communication devices provide the facility for users to store a large amount of confidential personal information on the device such as bank account details, personal contact details and calendar, diary entries and other data. Devices are also capable of sending e-mails and transmitting documents and it is probable that confidential e-mails and documents may be stored on the device. Therefore, the contents of the user's device may be confidential and a user will wish to prevent third parties from accessing them.

Mobile phone crime is common and the continued reduction in the size of mobile devices allows them to be easily misplaced or inadvertently left in public places. On losing a device, a user can advise the network that the device has been lost or stolen and the network will prevent that device from making or receiving calls. However, the network is not able to power down the phone. Therefore, the person in possession of the device may still access the features and information which is stored within the device although they are not able to connect to the network.

Generally this is a satisfactory solution for the user. Known devices contain address books and saved text messages, and although the loss of such information may be inconvenient, in general, it is not serious. Therefore, when a device is lost or stolen, most users are more concerned about preventing the use of the device for making calls than the loss of any personal information contained within the device.

In contrast, third generation systems will regularly contain a large amount of confidential personal information. The potential loss of the data stored on the device is likely to be more distressing to the user than the inconvenience of replacing the device. In fact, it is feasible that thieves may target mobile devices for the information stored within them rather than for the physical device itself. Users will require confidential information stored on the device to be secure and non-accessible if the device is lost or stolen.

Commonly used mobile devices provide authenticated access to the device through the manual entry of personal identification numbers (PINs). Typically, on power up the user will be required to enter a security PIN in order to gain access to the device. On entering the correct PIN the device will attach itself to the network and the user may access the features of the device. If the PIN is entered incorrectly access to the device is denied and, in certain cases, entering an incorrect PIN a predefined number of times will cause the device to deactivate. During use, the device may enter sleep mode or the keypad may be activated and deactivated by a combination of key presses, however, typically there is no requirement for further PIN entries and authentication is only required on power up.

Some mobile devices provide the facility for the user to set further PIN security mechanisms to provide access to selected functions of the mobile device. However, further PINs are rarely activated due to the inconvenience of executing the manual authorisation procedure each time the user wishes to use the restricted function.

In third generation systems, the frequency of access is likely to be considerably greater than that of current systems since the user will use the device to access non-call related features, for example e-mails, stored documents or diaries. Therefore, further PIN requirements will be more inconvenient for the user. In this case, users are even more unlikely to activate further PIN security mechanisms. This will leave users more prone to unauthenticated access to sensitive data.

Thus, third generation devices will potentially contain a large amount of user sensitive data and there is a need for increased security on the devices to prevent unauthorised access. However, increasing the number of manually entered PINs or passwords is inconvenient to the user.

US 6515575 provides a system comprising a portable data-communication terminal and a device for authenticating a user both including a transceiver for making radiocommunication to each other. The corresponding method includes transmitting and receiving user-authentication data between the portable data-communication terminal and the user-authenticating device and allowing the portable data-communication terminal to carry out a predetermined operation only when the portable data-communication terminal is authenticated to be located within a first distance from the user-authenticating device.

US 6070240 provides a method of controlling a computer system. A transponder places a first authorized user code in the operating space and a transceiver scans the operating space for the presence of a transponder transmitting an authorized user code and senses the presence of the first authorized user code in the operating space. A comparator compares the first authorized user code to a database for verification to unlock the computer for use by the first authorized user in response to sensing the authorized user code in the operating space.

### Disclosure of the Invention:

The present invention overcomes these problems by providing the subject-matter of the Claims.

Embodiments of the present invention overcome these problems by providing authorisation to access the electronic device via a series of radio signals between the electronic device and a radio module which is paired to the device. The module is carried separately from the device and, when authorisation is required, the device automatically attempts to detect the presence of the radio module.

In order to detect the presence of the module, the device transmits a search signal to the module. The radio module receives the search signal from the device and transmits an authorisation signal in response. On receiving the authorisation signal the electronic device provides the user with access to the restricted application. If the electronic device does not receive an authorisation signal from the module, access to the electronic device is initially refused and the user may be required to provide further authorisation, for example using a PIN, in order to access the restricted application.

The invention is defined more precisely in its various aspects in the appended claims to which reference should now be made.

### Brief Description of the Drawings:

Embodiments of the present invention will now be described in detail by way of example with reference to the accompanying drawings, in which:
Figure 1 is a flow diagram showing the authentication procedure between an electronic device and a paired radio module;
Figure 2 shows the communication link between the electronic device and a radio module;
Figure 3 is a flow diagram showing the procedure for executing a manual authorisation check;
Figure 4 is a flow diagram showing the procedure for obtaining access to the device in a preferred embodiment of the device;
Figure 5 is a block diagram showing an example of the configuration of the electronic device; and
Figure 6 is a block diagram showing an example of the configuration of the radio module.

### Best Mode for Carrying Out the Invention:

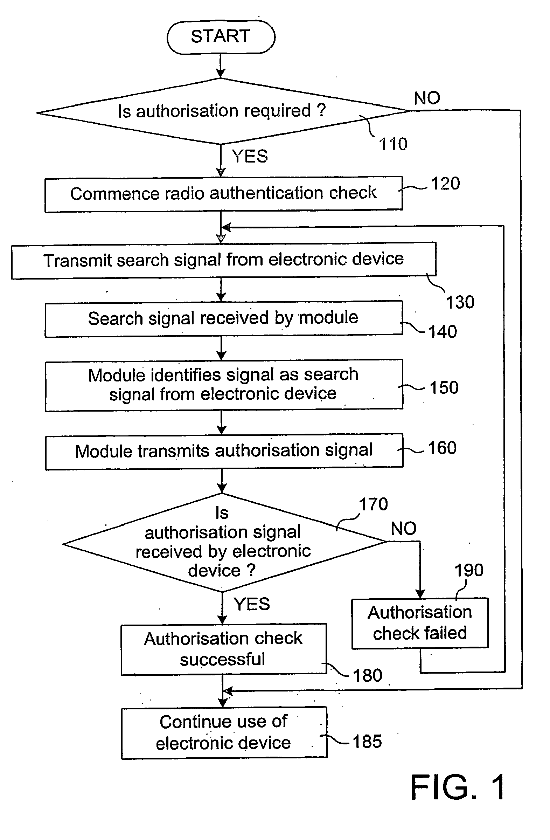

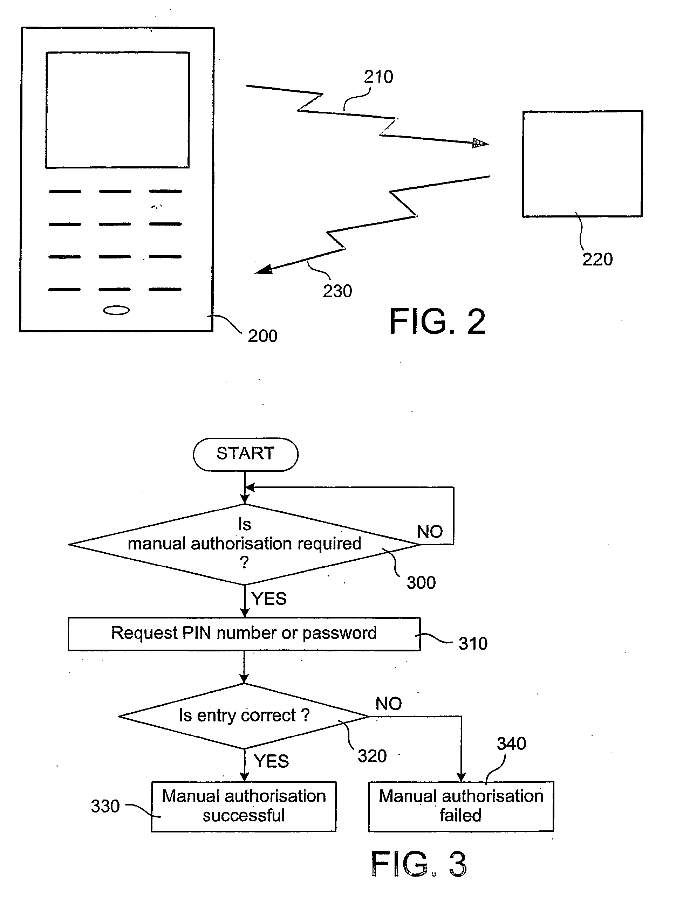

Figures 1 and 2 show the authentication procedure between the electronic device 200 and the radio module 220. At box 110 the device 200 determines whether authorisation is required. If the application is not required, the user may continue use of the device. However, if authorisation is required then the device 200 will commence an authorisation check with a paired radio module 220 at box 120.

The device 200 executes the authorisation check by transmitting a search signal 210 to a paired module 220 at box 130. The module 220 receives the search signal 210 at box 140 and identifies whether the signal was transmitted by the electronic device 200 at box 150. Typically the electronic device 200 will transmit signals on a specific frequency, however, further embodiments of the invention may include other means of identifying that the signal is a search signal 210. If the signal is identified as a search signal 210 at box 150, the module 220 transmits an authorisation signal 230 in response at box 150. If at box 170 the electronic device 200 receives the authorisation signal 230 from the module 220, the authorisation is successful at box 180, and the user continues use of the device at box 185.

If the device 200 does not receive the authorisation signal 230 at 170, then the authorisation check has failed at box 190. Typically a predetermined time period is set within which the device 200 expects to receive an authorisation signal 230. This time period is typically fractions of a second and will not be perceived by the user. If the authorisation signal 230 is not received within this period then the authorisation check has failed. If the authorisation check has failed at box 190, certain embodiments of the invention may re-execute an authorisation check by transmitting a further search signal 210 at box 130.

In preferred embodiments of the present invention, if the radio authorisation check fails then the device may execute a manual authentication check in order that the user may be provided with a further opportunity to access the device. Figure 3 shows the procedure for execution of a manual authentication procedure. At box 300 the device 200 determines whether manual authorisation is required. If manual authorisation is required then the device requests manual authorisation at box 310. Typically the device will require a PIN number or password which is entered via the keypad, however further embodiments may include audio passwords or other authorisation codes. If the entry is correct at box 320 then the manual authorisation is successful at box 330. However, if an incorrect PIN is provided at 320 then access to the manual authorisation has failed at box 340. Embodiments of the invention may then re-execute the manual authorisation check at box 310 for a predetermined number of times. In certain embodiments, if the user makes a predefined number of incorrect entries, the device will automatically shut down.

The radio authentication procedure may be used to restrict access to applications, files or functions of the device. Restricted applications may include areas of memory, files or software run applications on the electronic device. Furthermore, the makingor receiving of calls may be restricted. Preferred embodiments can be con figured by a user and the user can designate that any application of the device requires authentication before access to that application is permitted. In other embodiments, the device will automatically designate that access to applications is restricted. For example, the user may select that a restriction be included at power up of the device and therefore each time the device is powered up the user will not be allowed to proceed to use the device until authorisation is provided.

Apparatus for executing a radio authorisation procedure may be incorporated into any electronic device. Furthermore, the times at which the authorisation procedure is executed and the events which trigger the execution of the procedure will vary in the many possible embodiments of the invention. A few preferred embodiments are now described, however this list is not exhaustive.

In a first preferred embodiment a radio authorisation check is made on power up of an electronic device and subsequently at each time a new application is selected. If the radio authorisation check is successful then access to that application is permitted. If radio authorisation is not successful then the device will require manual authorisation in order that the user may be permitted access to the application.

Once the user has successfully gained access to a particular application, no further radio or manual authorisation checks are executed for that application while the device remains powered up. However, once the device is powered down, the authorisation status of the device is reset and an authorisation check will be executed again after power up. In this embodiment, authorisation may be required for all application or only selected applications. The selected applications may be determined by the user, or automatically by the device.

In a second preferred embodiment the device executes a radio authorisation check when the unit is powered up. If the radio authorisation is successful, the user is permitted use of the device. If the radio authorisation check fails after power up, the user is required to enter a manual authorisation in order to proceed with use of the device.

Once access to the device has been obtained the device may perform further radio authorisation checks either at regular time intervals and/or on selection of a secure application. The time periods at which the authorisation checks are executed and applications which are secure may be determined by the user or configured during production.

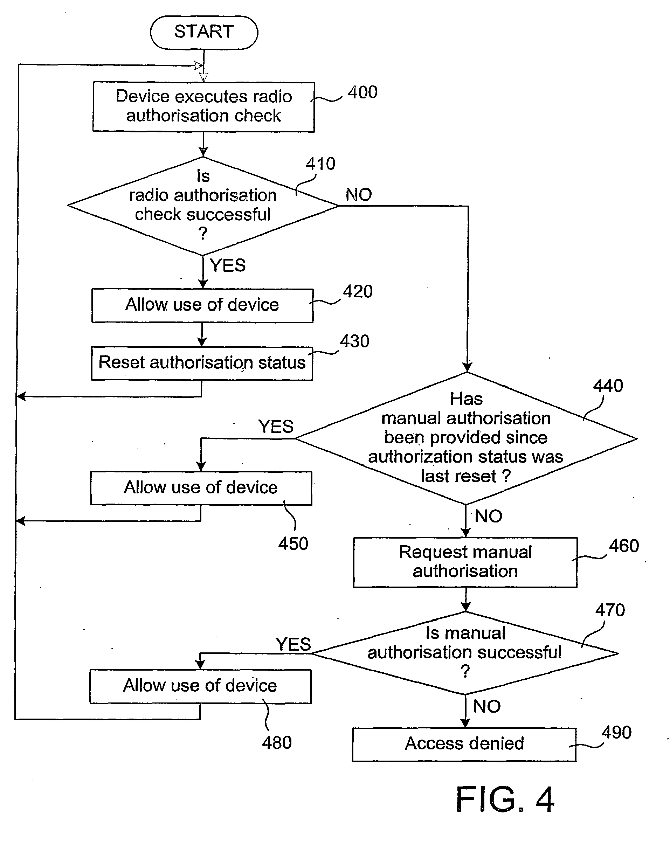

The procedure following a radio authorisation check is shown in the flow diagram of figure 4. At box 400 the device executes a radio authorisation check. If the check is successful at box 410 use of the device is permitted at box 420. The authorisation history is then deleted from the memory of the device and the authorisation status of the device is reset at box 430.

If the radio authorisation check is unsuccessful at box 410 the device determines, at box 440, whether correct manual authorisation has been provided since the last reset of the authorisation status. If manual authorisation has been provided since the last reset then use of the device is permitted at box 450. However, if manual authorisation has not been provided then manual authorisation is requested at box 460. If the manual authorisation is correctly entered at box 470, access is provided at box 480. If manual authorisation is not correctly entered at 470 then access is denied at box 490.

Therefore, in the situation when a user powers up his mobile telephone out of the range of the radio module he will be prompted for manual authorisation in order to gain access to the device. If the user correctly provides the manual authorisation he is permitted use of the device. Once the device returns to within the range of the module and the device executes a successful radio authorisation, the authorisation status of the device will be reset. The user will be prompted to enter manual authorisation on the next occasion when the radio authorisation check is unsuccessful. In this embodiment, if the device is stolen or misplaced while in the range of the radio module then subsequent use of the device outside the range of the module is not permitted until correct manual authorisation has been provided.

In a third preferred embodiment a radio authorisation check is executed on power up. If the check is successful then access is permitted to the unit, however if the check is unsuccessful then the user must provide correct manual authorisation in order to gain access to the device. Once access is obtained, the user is provided with use of the device. However, the unit includes a timer to determine the time period for which the device is idle. When the device is idle for a time period exceeding a predefined time period the authorisation status of the device is reset and the next time a key is depressed a radio authorisation check is made.

Further embodiments execute radio authorisation checks each time an application is selected or periodic authorisation checks in order to provide continued use of the device.

Embodiments of the present invention allow a user to restrict access to certain applications within a mobile communications device. Authentication is provided by an exchange of signals between the device and a radio module which is paired to the device. The authorisation is provided automatically and the user is not required to enter any passwords unless the device is out of range of the module. In fact, if the radio authorisation check is successful, the user will be unaware that an authorisation check has been made. The invention provides a user with secure applications within his electronic device and, as long as the device is in the vicinity of the module, the user will not have the inconvenience of manually providing authorisation to access the secure application.

The increasingly widespread use of radio hands free sets, in particular devices incorporating e.g. Bluetooth technology, enables a separate device to be carried which is distinctfrom the device. The hands free device is unlikely to be lost or stolen with the device and therefore, any unauthorised user will not remain in the range of the radio device. The user may be provided with a small radio device which is dedicated to use with the invention or the module may be incorporated any radio device which the user carries on his person. Such a device could be kept in a user's wallet or purse or on a key-ring.

Embodiments of the invention also provide users with different levels of security for applications. For example, a user may designate that certain applications can only be accessed in the presence of a first module. More sensitive applications might only be accessible in the presence of a second module. The user may also have the option of not allowing access at all if the required module is not present and therefore any radio authorisation checks are unsuccessful.

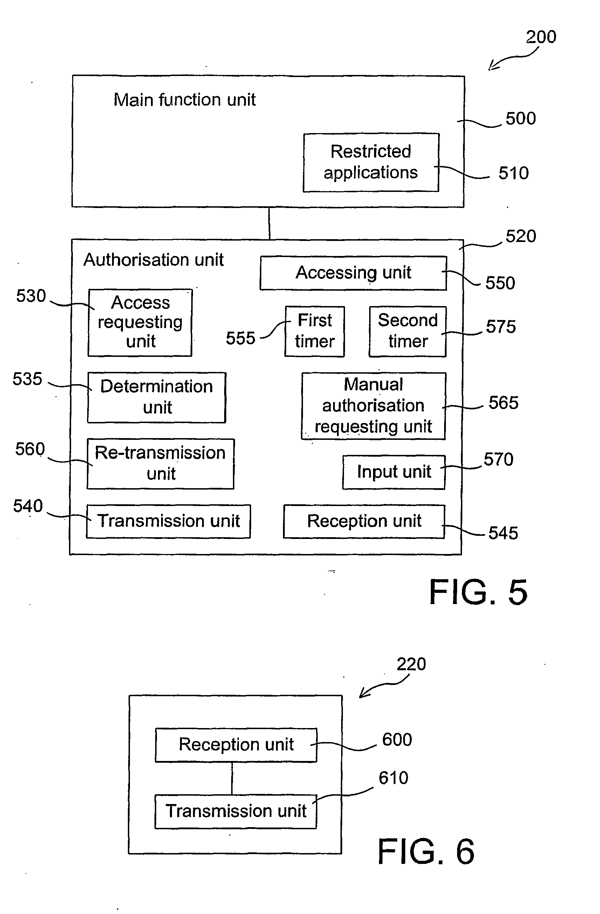

An example of the electronic device according to the present invention is illustrated in Figure 5. The illustrated electronic device 200 generally consists of a main function unit 500 and authorisation unit 520. The main function unit 500 includes restricted applications 510 to which the user wish to access. The authorisation unit 520 has a access requesting unit 530 for requesting access to the electronic device, a determination unit 535 for determining that authorisation is required in order that access be provided, a transmission unit 540 for transmitting a search signal upon determination that authorisation is required, a reception unit 545 for receiving an authorisation signal, and an accessing unit 550 for providing access to the electronic device in dependence on the received authorisation signal. Typically, the search signal and authorisation signal are radio signals.

The electronic device may include, in the authorisation unit 520, a first timer 555 for determining a first time period between transmission of the search signal and receipt of the authorisation signal. In this case, access to the electronic device will be provided in dependence on the first time period being less than a first predefined time period. The electronic device may be additionally provided with a re-transmission unit 560 in the authorisation unit 520 to re-transmit the search signal if the authorisation signal is not received within the first predefined time period. The electronic device may be further provided with, in the authorisation unit 520, a manual authorisation requesting unit 565 for requesting manual authorisation to the user if the authorisation signal is not received within the first predefined time period, and an input unit 570 for inputting the manual authorisation such as a personal identification number.

In the electronic device, the determination unit 535 may perform its function on power up of the electronic device and/or periodically after power up of the electronic device. Alternatively, the determination unit 535 may perform its function when access to selected applications on the electronic device is requested.

The electronic device may include, in the authorisation unit 520, a second timer 575 for measuring a second time period for which the electronic device has been idle. The determination unit 535 may perform its function in dependence on the second time period exceeding a second predefined time period. The second predefined time period may be determined by a user.

An example of the radio module according to the present invention is illustrated in Figure 6. The radio module 220 includes a reception unit 600 for receiving a search signal from the electronic device, and a transmission unit 610 for transmitting an authorisation signal for the electronic device in response to the received search signal. The search signal and authorisation signal are typically radio signals.

It will be obvious to those skilled in the art that the present invention is not restricted to use with mobile phones. The invention can be applied to any electronic device, for example a laptop computer, or personal organiser. Furthermore, the invention can be usefully incorporated into any fixed position electronic device for example a personal computer.

## Claims

1. An apparatus for providing access to an electronic device (200) comprising:
means (530) for requesting access to the electronic device;
means (535) for determining that authorisation is required in order that access be provided;
means (540) for transmitting a search signal upon determination that authorisation is required;
means (545) for receiving an authorisation signal; and
means (550) for providing access to the electronic device in dependence on the received authorisation signal,
**characterized by**: means (555) for determining a first time period between transmission of the search signal and receipt of the authorisation signal wherein access to the electronic device is provided in dependence on the first time period being less than a first predefined time period, and
means (565) for requesting manual authorisation if the authorisation signal is not received within the first predefined time period.

2. An apparatus according to claim 1, comprising a means (560) to re-transmit the search signal if the authorisation signal is not received within the first predefined time period.

3. An apparatus according to claim 1 or 2, comprising means (570) for inputting manual authorisation.

4. An apparatus according to claim 3, wherein the manual authorisation is a personal identification number.

5. An apparatus according to any one of claims 1 to 4, wherein the means (535) for determining that authorisation is required performs this function on power up of the electronic device.

6. An apparatus according to any one of claims 1 to 5, wherein the means (535) for determining that authorisation is required performs this function when access to selected applications on the electronic device is requested.

7. An apparatus according to claim 5, wherein the means (535) for determining that authorisation is required performs this function periodically after power up of the electronic device.

8. An apparatus according to any one of claims 1 to 7, comprising means (575) for measuring a second time period for which the electronic device has been idle.

9. An apparatus according to claim 8, wherein the means (535) for determining that authorisation is required performs this function in dependence on the second time period exceeding a second predefined time period.

10. An apparatus according to claim 9, wherein the second predefined time period is determined by a user.

11. An apparatus according to any one of claim 1 to 10, wherein the search signal and authorisation signal are radio signals.

12. A method for providing access to an electronic device (200) comprising the steps of:
requesting access to the electronic device (200);
determining that authorisation is required in order that access be provided;
transmitting a search signal upon determining that authorisation is required;
receiving an authorisation signal; and
providing access to the electronic device (200) in dependence on the received authorisation signal;
**characterized by** comparing a first time period between the transmission of the search signal and the receipt of the authorisation signal with a first predefined time period and providing access to the electronic device (200) in dependence on the time period being less than the first predefined time period, and
requesting manual authorisation if the authorisation signal is not received within the first predefined time period.

13. A method according to claim 12, including the step of re-transmitting the search signal if the authorisation signal is not received within the first predefined time period.

14. A method according to claim 12 or 13, wherein the manual authorisation is a personal identification number.

15. A method according to any one of claims 12 to 14, wherein the step of determining that authorisation is required is performed on power up of the electronic device.

16. A method according to any one of claims 12 to 15, wherein the step of determining that authorisation is required is performed when access to selected applications on the electronic device (200) is requested.

17. A method according to claim 16, wherein the step of determining that authorisation is required is performed periodically after power up of the electronic device (200).

18. A method according to any one of claims 12 to 17, including the step of measuring a second time period for which the electronic device (200) has been idle.

19. A method according to claim 18, wherein the step of determining that authorisation is required is performed in dependence on the second time period exceeding a second predefined time period.

20. A method according to claim 19, wherein the second predefined time period is determined by the user.

21. A method according to any one of claims 12 to 20, wherein the search signals and authorisation signals are radio signals.

22. A system for authorising access to an electronic device (200) comprising
the apparatus of claim 2 comprising an electronic device (200); and
an electronic module (220);
and wherein the electronic module (220) comprises
means (600) for receiving a search signal from the electronic device (200), and
means (610) for transmitting an authorisation signal for the electronic device (200) in response to the received search signal.

23. A method for authorising access to an electronic device (200) including the method of claim 12,
wherein the search signal is a search signal from the electronic device (200);
the method for authorising access further comprising the steps of:
receiving the search signal at an electronic module (220);
transmitting an authorisation signal from the electronic module (220) in response to the received search signal, and
wherein the step of receiving an authorisation signal is a step of receiving the authorisation signal at the electronic device (200).

## Patentansprüche

1. Apparat zum Gewähren des Zugriffs auf ein elektronisches Gerät (200) mit:
einer Einrichtung (530) zur Anforderung des Zugriffs auf das elektronische Gerät;
einer Einrichtung (535) zur Feststellung, daß eine Autorisierung erforderlich ist, damit Zugriff gewährt wird;
einer Einrichtung (540) zum Übertragen eines Suchsignals nach der Feststellung, daß eine Autorisierung erforderlich ist;
einer Einrichtung (545) zum Empfang eines Autorisierungssignals; und
einer Einrichtung (550), um in Abhängigkeit von dem empfangenen Autorisierungssignal Zugriff zu dem elektronischen Gerät zu gewähren,
**gekennzeichnet durch**: eine Einrichtung (555) zur Festlegung einer ersten Zeitspanne zwischen Übertragung des Suchsignals und Empfang des Autorisierungssignals, wobei Zugriff zu dem elektronischen Gerät in Abhängigkeit davon gewährt wird, daß die erste Zeitspanne kürzer ist als eine erste vordefinierte Zeitspanne, und
eine Einrichtung (565) zur Anforderung einer manuellen Autorisierung, wenn das Autorisierungssignal nicht innerhalb der ersten vordefinierten Zeitspanne empfangen wird.

2. Apparat nach Anspruch 1, der eine Einrichtung (560) zur nochmaligen Übertragung des Suchsignals aufweist, wenn das Autorisierungssignal nicht innerhalb der ersten vordefinierten Zeitspanne empfangen wird.

3. Apparat nach Anspruch 1 oder 2, der eine Einrichtung (570) zur Eingabe einer manuellen Autorisierung aufweist.

4. Apparat nach Anspruch 3, wobei die manuelle Autorisierung eine persönliche Identifikationsnummer (Pin) ist.

5. Apparat nach einem der Ansprüche 1 bis 4, wobei die Einrichtung (535) zur Feststellung, daß eine Autorisierung erforderlich ist, diese Funktion beim Einschalten des elektronischen Geräts ausführt.

6. Apparat nach einem der Ansprüche 1 bis 5, wobei die Einrichtung (535) zur Feststellung, daß eine Autorisierung erforderlich ist, diese Funktion ausführt, wenn Zugriff zu ausgewählten Anwendungen auf dem elektronischen Gerät angefordert wird.

7. Apparat nach Anspruch 5, wobei die Einrichtung (535) zur Feststellung, daß eine Autorisierung erforderlich ist, diese Funktion regelmäßig nach dem Einschalten des elektronischen Geräts ausführt.

8. Apparat nach einem der Ansprüche 1 bis 7, die eine Einrichtung (575) zur Messung einer zweiten Zeitspanne aufweist, während der sich das elektronische Gerät im Ruhezustand befunden hat.

9. Apparat nach Anspruch 8, wobei die Einrichtung (535) zur Feststellung, daß eine Autorisierung erforderlich ist, diese Funktion in Abhängigkeit davon ausführt, daß die zweite Zeitspanne eine zweite vordefinierte Zeitspanne überschreitet.

10. Apparat nach Anspruch 9, wobei die zweite vordefinierte Zeitspanne durch einen Benutzer festgelegt wird.

11. Apparat nach einem der Ansprüche 1 bis 10, wobei das Suchsignal und das Autorisierungssignal Funksignale sind.

12. Verfahren zur Gewährung des Zugriffs auf ein elektronisches Gerät (200), mit den folgenden Schritten:
Anforderung des Zugriffs auf das elektronische Gerät (200);
Feststellen, daß eine Autorisierung erforderlich ist, damit Zugriff gewährt wird;
Übertragung eines Suchsignals auf die Feststellung hin, daß eine Autorisierung erforderlich ist;
Empfang eines Autorisierungssignals; und
Gewähren des Zugriffs auf das elektronische Gerät (200) in Abhängigkeit von dem empfangenen Autorisierungssignal;
**gekennzeichnet durch** Vergleich einer ersten Zeitspanne zwischen der Übertragung des Suchsignals und dem Empfang des Autorisierungssignals mit einer ersten vordefinierten Zeitspanne und Gewähren des Zugriffs auf das elektronische Gerät (200) in Abhängigkeit davon, daß die Zeitspanne kürzer ist als die erste vordefinierte Zeitspanne, und
Anfordern einer manuellen Autorisierung, wenn das Autorisierungssignal nicht innerhalb der ersten vordefinierten Zeitspanne empfangen wird.

13. Verfahren nach Anspruch 12, das den Schritt zur nochmaligen Übertragung des Suchsignals einschließt, wenn das Autorisierungssignal nicht innerhalb der ersten vordefinierten Zeitspanne empfangen wird.

14. Verfahren nach Anspruch 12 oder 13, wobei die manuelle Autorisierung eine persönliche Identifikationsnummer ist.

15. Verfahren nach einem der Ansprüche 12 bis 14, wobei der Schritt zur Feststellung, daß eine Autorisierung erforderlich ist, beim Einschalten des elektronischen Geräts ausgeführt wird.

16. Verfahren nach einem der Ansprüche 12 bis 15, wobei der Schritt zur Feststellung, daß eine Autorisierung erforderlich ist, ausgeführt wird, wenn Zugriff zu ausgewählten Anwendungen auf dem elektronischen Gerät (200) angefordert wird.

17. Verfahren nach Anspruch 16, wobei der Schritt zur Feststellung, daß eine Autorisierung erforderlich ist, regelmäßig nach dem Einschalten des elektronischen Geräts (200) ausgeführt wird.

18. Verfahren nach einem der Ansprüche 12 bis 17, das den Schritt zur Messung einer zweiten Zeitspanne einschließt, während der sich das elektronische Gerät (200) im Ruhezustand befunden hat.

19. Verfahren nach Anspruch 18, wobei der Schritt zur Feststellung, daß eine Autorisierung erforderlich ist, in Abhängigkeit davon ausgeführt wird, daß die zweite Zeitspanne eine zweite vordefinierte Zeitspanne überschreitet.

20. Verfahren nach Anspruch 19, wobei die zweite vordefinierte Zeitspanne durch den Benutzer festgelegt wird.

21. Verfahren nach einem der Ansprüche 12 bis 20, wobei die Suchsignale und Autorisierungssignale Funksignale sind.

22. System zur Autorisierung des Zugriffs auf ein elektronisches Gerät (200) mit dem Apparat nach Anspruch 2, wobei das System ein elektronisches Gerät (200) und ein elektronisches Modul (220) aufweist;
wobei das elektronische Modul (220) aufweist:
eine Einrichtung (600) zum Empfang eines Suchsignals von dem elektronischen Gerät (200), und
eine Einrichtung (610) zur Übertragung eines Autorisierungssignals für das elektronische Gerät (200) als Reaktion auf das empfangene Suchsignal.

23. Verfahren zur Autorisierung des Zugriffs auf ein elektronisches Gerät (200), welches das Verfahren nach Anspruch 12 einschließt,
wobei das Suchsignal ein Suchsignal von dem elektronischen Gerät (200) ist;
wobei das Verfahren zur Autorisierung des Zugriffs ferner die folgenden Schritte aufweist:
Empfang des Suchsignals in einem elektronischen Modul (220);
Übertragung eines Autorisierungssignals von dem elektronischen Modul (220) als Reaktion auf das empfangene Suchsignal; und
wobei der Schritt zum Empfang eines Autorisierungssignals ein Schritt zum Empfang des Autorisierungssignals in dem elektronischen Gerät (200) ist.

## Revendications

1. Appareil pour fournir l'accès à un dispositif électronique (200) comprenant :
des moyens (530) pour demander l'accès au dispositif électronique ;
des moyens (535) pour déterminer qu'une autorisation est requise pour que l'accès soit fourni ;
des moyens (540) pour transmettre un signal de recherche à la détermination qu'une autorisation est requise ;
des moyens (545) pour recevoir un signal d'autorisation ; et
des moyens (550) pour fournir l'accès au dispositif électronique en fonction du signal d'autorisation reçu,
**caractérisé par** : des moyens (555) pour déterminer une première période de temps entre la transmission du signal de recherche et la réception du signal d'autorisation dans lequel l'accès au dispositif électronique est fourni en fonction du fait que la première période de temps est inférieure à une première période de temps prédéfinie, et
des moyens (565) pour demander une autorisation manuelle si le signal d'autorisation n'est pas reçu au cours de la première période de temps prédéfinie.

2. Appareil selon la revendication 1, comprenant un moyen (560) pour retransmettre le signal de recherche si le signal d'autorisation n'est pas reçu au cours de la première période de temps prédéfinie.

3. Appareil selon la revendication 1 ou 2, comprenant des moyens (570) pour entrer une autorisation manuelle.

4. Appareil selon la revendication 3, dans lequel l'autorisation manuelle est un numéro d'identification personnelle.

5. Appareil selon l'une quelconque des revendications 1 à 4, dans lequel les moyens (535) pour déterminer qu'une autorisation est requise effectuent cette fonction à la mise sous tension du dispositif électronique.

6. Appareil selon l'une quelconque des revendications 1 à 5, dans lequel les moyens (535) pour déterminer qu'une autorisation est requise effectuent cette fonction lorsque l'accès à des applications sélectionnées sur le dispositif électronique est demandé.

7. Appareil selon la revendication 5, dans lequel les moyens (535) pour déterminer qu'une autorisation est requise effectuent cette fonction périodiquement après la mise sous tension du dispositif électronique.

8. Appareil selon l'une quelconque des revendications 1 à 7, comprenant des moyens (575) pour mesurer une deuxième période de temps au cours de laquelle le dispositif électronique était en veille.

9. Appareil selon la revendication 8, dans lequel les moyens (535) pour déterminer qu'une autorisation est requise effectuent cette fonction en fonction du fait que la deuxième période de temps dépasse une deuxième période de temps prédéfinie.

10. Appareil selon la revendication 9, dans lequel la deuxième période de temps prédéfinie est déterminée par un utilisateur.

11. Appareil selon l'une quelconque des revendications 1 à 10, dans lequel le signal de recherche et le signal d'autorisation sont des signaux radio.

12. Procédé pour fournir l'accès à un dispositif électronique (200) comprenant les étapes consistant à :
demander l'accès au dispositif électronique (200) ;
déterminer qu'une autorisation est requise pour que l'accès soit fourni ;
transmettre un signal de recherche à la détermination qu'une autorisation est requise ;
recevoir un signal d'autorisation ; et
fournir l'accès au dispositif électronique (200) en fonction du signal d'autorisation reçu,
**caractérisé par** la comparaison d'une première période de temps entre la transmission du signal de recherche et la réception du signal d'autorisation à une première période de temps prédéfinie et fournir l'accès au dispositif électronique (200) en fonction du fait que la période de temps est inférieure à la première période de temps prédéfinie, et
demander une autorisation manuelle si le signal d'autorisation n'est pas reçu au cours de la première période de temps prédéfinie.

13. Procédé selon la revendication 12, comprenant l'étape consistant à retransmettre le signal de recherche si le signal d'autorisation n'est pas reçu au cours de la première période de temps prédéfinie.

14. Procédé selon la revendication 12 ou 13, dans lequel l'autorisation manuelle est un numéro d'identification personnelle.

15. Procédé selon l'une quelconque des revendications 12 à 14, dans lequel l'étape de détermination qu'une autorisation est requise est effectuée à la mise sous tension du dispositif électronique.

16. Procédé selon l'une quelconque des revendications 12 à 15, dans lequel l'étape de détermination qu'une autorisation est requise est effectuée lorsque l'accès à des applications sélectionnées sur le dispositif électronique (200) est demandé.

17. Procédé selon la revendication 16, dans lequel l'étape de détermination qu'une autorisation est requise est effectuée périodiquement après la mise sous tension du dispositif électronique (200).

18. Procédé selon l'une quelconque des revendications 12 à 17, comprenant l'étape de mesure d'une deuxième période de temps au cours de laquelle le dispositif électronique (200) était en veille.

19. Procédé selon la revendication 18, dans lequel l'étape de détermination qu'une autorisation est requise est effectuée en fonction du fait que la deuxième période de temps dépasse une deuxième période de temps prédéfinie.

20. Procédé selon la revendication 19, dans lequel la deuxième période de temps prédéfinie est déterminée par l'utilisateur.

21. Procédé selon l'une quelconque des revendications 12 à 20, dans lequel les signaux de recherche et les signaux d'autorisation sont des signaux radio.

22. Système pour autoriser l'accès à un dispositif électronique (200) comprenant l'appareil de la revendication 2 comprenant un dispositif électronique (200) ; et
un module électronique (220) ;
et dans lequel le module électronique (220) comprend
des moyens (600) pour recevoir un signal de recherche du dispositif électronique (200), et
des moyens (610) pour transmettre un signal d'autorisation pour le dispositif électronique (200) en réponse au signal de recherche reçu.

23. Procédé pour autoriser l'accès à un dispositif électronique (200) comprenant le procédé de la revendication 12,
dans lequel le signal de recherche est un signal de recherche émanant du dispositif électronique (200) ;
le procédé pour autoriser l'accès comprenant en outre les étapes consistant à :
recevoir le signal de recherche à un module électronique (220) ;
transmettre un signal d'autorisation du module électronique (220) en réponse au signal de recherche reçu ; et
dans lequel l'étape de réception d'un signal d'autorisation est une étape de réception du signal d'autorisation au dispositif électronique (200).
